Europäisches Patentamt

European Patent Office

Office européen des brevets

(19)

(11) EP 0 714 916 A1

(12) DEMANDE DE BREVET EUROPEEN

(43) Date de publication:
05.06.1996 Bulletin 1996/23

(51) Int Cl.⁶: **C08F 2/38**, C09D 4/00, C09D 4/06

(21) Numéro de dépôt: 95402665.4

(22) Date de dépôt: 27.11.1995

(84) Etats contractants désignés:
AT BE CH DE DK ES FR GB GR IE IT LI LU NL PT
SE

(30) Priorité: 30.11.1994 FR 9414367

(71) Demandeur: ELF ATOCHEM S.A.
F-92800 Puteaux (FR)

(72) Inventeurs:
 • Vanhoye, Didier
  F-27300 Bernay (FR)
 • Loubet, Olivier
  F-34290 Servian (FR)

 • Ballot, Elsa
  F-77380 Combs la Ville (FR)
 • Boutevin, Bernard
  F-34090 Montpellier (FR)
 • Legros, Robert
  F-60940 Monceaux (FR)
 • Ameduri, Bruno
  F-34090 Montpellier (FR)

(74) Mandataire: Chaillot, Geneviève
 Cabinet CHAILLOT,
 16-20, avenue de L'Agent Sarre,
 B.P. 74
 F-92703 Colombes Cédex (FR)

(54) **Compositions photoréticulables à base de méthacrylate de trifluoro éthyle et leurs procédés de préparation**

(57) Cette composition photopolymérisable comprend un oligomère ayant des motifs de méthacrylate de trifluoroéthyle, un diluant et un amorceur de photopolymérisation. Elle donne des revêtements transparents hydrophobes.

**Description**

La présente invention concerne des compositions à base de méthacrylate de trifluoroéthyle, qui sont thermoréticulables ou photopolymérisables et/ou photoréticulables et qui peuvent être utilisées dans le domaine des revêtements thermodurcissables ou réticulables sous rayonnement par exemple dans les vernis, adhésifs, encres, circuits imprimés, où ils apportent une amélioration des propriétés hydrophobes et oléophobes des revêtements protecteurs.

La synthèse de résines acryliques de faible masse molaire en solution selon la technique de télomérisation est bien connue et a été décrite dans des ouvrages de référence tels que "Free radical Telomerization" de C.M. Starks (Academic Press 1974)... On a déjà décrit la synthèse d'oligomères réactifs obtenus par télomérisation d'un monomère réactif constitué par un monomère carboxylique acrylique ou un monomère acrylique époxydé, ou un monomère acrylique hydroxylé. Ces télomères porteurs de fonctions réactives sont ensuite greffés par un monomère acrylique porteur d'une fonction chimiquement réactive avec les fonctions des télomères. Les résines obtenues peuvent ensuite être durcies en présence d'un amorceur de polymérisation à la température adéquate ou par action d'un rayonnement ultraviolet en présence d'un photoamorceur. Ces travaux sont illustrés par exemple dans la thèse de M. Maliszewics défendue en 1982 à Montpellier concernant la synthèse de télomères photoréticulables et dans celle de M. J.L. Parisi déposée en 1985 "Synthèse de télomères photoréticulables et application aux revêtements de métaux et à l'ensimage des fibres de carbones".

Les demandes des brevets français FR-A-2 607 509 et FR-A-2 615 517 font également référence à la synthèse de compositions de résines polyacryliques insaturées et à leur procédé de durcissement.

Le greffage de résines polyacryliques porteuses de groupement époxy par un acide (méth)acrylique et la photoréticulation des compositions obtenues a été décrit dans Polymer Photochemistry 5, (1984), pages 93-107.

Plus récemment, la synthèse de polymères fonctionnels présentant des groupes méthacryliques pendants obtenus par réaction d'un monomère époxyde avec les structures acide maléimido benzoïque du polymère a été décrite dans Angewandte Makromolekulare Chemie 212 (1993), pages 53-65, les nouvelles compositions obtenues étant utilisées dans le domaine de la photoréticulation.

D'autre part, la préparation des télomères fluorés a été décrite dans le brevet EP 426 530 par action d'un thiol fluoré sur un monomère perfluoré présentant une chaîne alkylène fluoré de 2 à 20 carbones. Les utilisations de ces nouvelles compositions concernent les domaines du textile et du cuir, où ils apportent des propriétés hydrofuges et oléofuges. Ces compositions ne sont pas durcissables thermiquement ou photochimiquement et concernent des applications nécessitant un haut niveau de performance (oléophilie) et justifient un coût élevé pour le revêtement.

Cependant, il existe un certain nombre d'applications où la propriété recherchée concerne la résistance à l'eau du revêtement et aux agents chimiques.

L'invention y pourvoit par une nouvelle composition polymérique qui est constituée

(a) de 30 à 90 parties en poids d'un oligomère ayant un degré de polymérisation compris entre 5 et 16 et ayant de 75 à 95% en poids de motifs de méthacrylate de trifluoroéthyle et de 5 à 25% en poids de motifs d'un thiol de formule R-SH dans laquelle R est alcoyle linéaire ayant de 8 à 20 atomes de carbone ou alkylèneperfluoroalcoyle ayant de 1 à 4 atomes de carbone dans la portion alkylène et de 8 à 20 atomes de carbone en tout, ou d'un thiol fonctionnel,

(b) de 10 à 70 parties en poids d'un diluant.

L'invention vise également une composition constituée :

(a) de 50 à 90 parties en poids d'un oligomère ayant un degré de polymérisation compris entre 5 et 16 et ayant de 15 à 80% en poids de motifs de méthacrylate de trifluoroéthyle, de 5 à 25% en poids de motifs d'un thiol tel que défini ci-dessus, de 5 à 40% en poids de motifs d'un monomère réactif choisi parmi

(i) l'acide acrylique ou l'acide méthacrylique ; et
(ii) les monomères acryliques époxydés, les monomères acryliques hydroxylés et les monomères acryliques à fonction très réactive,

et de 1 à 25% en poids de motifs d'un monomère selon (i) quand l'oligomère contient déjà des motifs de monomère réactif selon (ii) ou de motifs d'un monomère (ii) quand l'oligomère contient déjà, comme motifs de monomère réactif, un motif selon (i) ;
(b) de 10 à 50 parties en poids d'un diluant ;
(c) d'une quantité d'amorceur de photopolymérisation suffisante pour provoquer la réticulation de la composition quand elle est exposée à un rayonnement actinique.

L'invention vise enfin une composition photopolymérisable, qui est constituée

(a) de 90 à 50 parties en poids d'un oligomère ayant un degré de polymérisation compris entre 5 et 16 et ayant de 15 à 80% en poids de motifs de méthacrylate de trifluoroéthyle, de 5 à 40% en poids de motifs d'un monomère réactif tel que défini sous (i) ou sous (ii) ci-dessus, de 5 à 25% en poids de motifs d'un thiol tel que défini ci-dessus, de 5 à 60% en poids de motifs de monomère acrylique dépourvu de fonction réactive et de 1 à 25% en poids de motifs de monomère réactif tels que définis sous (i) lorsque l'oligomère contient déjà des motifs de monomère acrylique réactif définis sous (ii) ou de motifs de monomère réactif défini sous (ii), quand l'oligomère contient déjà des motifs de monomère acrylique réactif définis sous (i) ;
(b) de 10 à 50 parties en poids d'un diluant ;
(c) d'une quantité d'amorceur de photopolymérisation suffisante pour provoquer la réticulation de la composition quand elle est exposée à un rayonnement actinique.

Les oligomères suivant l'invention ont des propriétés hydrophobes dues à la présence de méthacrylate de trifluoroéthyle sans avoir, à la différence de ce dernier, un point d'ébullition trop bas qui restreindrait leur utilisation dans les tunnels d'exposition à la lumière ultraviolette.

Le procédé selon l'invention se divise en 3 étapes:

1. Synthèse des télomères réactifs,
2. Greffage des télomères réactifs,
3. Durcissement des compositions polyacryliques obtenues, pour obtenir des revêtements protecteurs présentant des performances hydrophobes améliorées.

Synthèse des télomères réactifs :

Les télomères selon l'invention sont obtenus en faisant réagir le méthacrylate de trifluoroéthyle éventuellement avec un monomère acrylique présentant une fonction réactive et éventuellement un ou plusieurs autres monomères acryliques à chaîne alkyle et dépourvus de groupe réactif, en présence d'une quantité importante d'un agent de transfert présentant une constante de transfert élevée et d'un amorceur azoïque ou peroxyde, dans un solvant inerte. La réaction est menée à pression normale à une température fonction du solvant et de l'amorceur utilisés. Cette réaction peut également être réalisée sous pression supérieure sans que cela apporte un avantage déterminant. Les télomères obtenus possèdent une masse molaire moyenne en nombre comprise entre 600 et 5000 et, préférentiellement, entre 1000 et 3000.

Dans le procédé selon l'invention, le méthacrylate de trifluoroéthyle est utilisé à raison de 15 à 80% en poids et, préférentiellement, de 20 à 60% poids.

Le monomère réactif est choisi parmi les monomères acryliques carboxyliques : acide acrylique et acide méthacrylique ou parmi les monomères acryliques époxydés : préférentiellement, le méthacrylate de glycidyle ou encore, parmi les monomères acryliques hydroxylés tels que les (méth)acrylates d'hydroxyéthyle, d'hydroxypropyle, d'hydroxybutyle, préférentiellement les (méth)acrylates d'hydroxyéthyle.

Le monomère réactif peut également être choisi parmi les monomères (méth)acryliques possédant des fonctions très réactives, tels que les chlorures de (méth)acryloyle et les isocyanates de (méth)acryloyloxyalkyle, préférentiellement le chlorure de méthacryloyle et l'isocyanate de méthacryloyloxyéthyle. Les monomères réactifs utilisés préférentiellement sont les acides (méth)acryliques et le méthacrylate de glycidyle.

Le monomère acrylique réactif est introduit à raison de 5 à 40% poids, préférentiellement 5 à 30% poids, de manière à apporter le nombre de fonctions désiré.

Les monomères acryliques dépourvus de fonctions réactives sont choisis dans la famille des monomères méthacrylates et acrylates d'alkyle, tels que méthacrylate de butyle, acrylate de butyle, acrylate d'éthyle, acrylate de méthyle, acrylate de 2-éthylhexyle, acrylate de nonyle, acrylate d'octyle. Préférentiellement, ces monomères sont choisis parmi ceux donnant un homopolymère de basse Tg (température de transition vitreuse) en raison de la Tg élevée du Poly MATRIFE (80°C) tels que acrylate de butyle ou acrylate de 2-éthylhexyle, afin d'assurer une Tg convenable pour le tertélomère (20<Tg<70). Ces monomères sont introduits à raison de 5 à 60% en poids, préférentiellement de 20 à 50% en poids.

L'agent de transfert est choisi dans la gamme des thiols aliphatiques présentant une chaîne alkyle linéaire ou ramifiée ayant au moins 6 atomes de carbone tels que l'hexanethiol.., le dodécanethiol et le terdodécanethiol. Les thiols aliphatiques préférés sont le dodécanethiol et le terdodécanethiol.

L'agent de transfert peut également être choisi dans la gamme des thiols fluorés possédant une structure du type $C_nF_{2n}$-$C_2H_4$-SH, n étant compris entre 4 et 10, les thiols fluorés préférés sont le $C_6F_{13}(CH_2)_2$-SH et le $C_8F_{17}(CH_2)_2$SH.

L'utilisation de thiols fonctionnels constitue également un moyen adéquat pour réaliser la réaction de télomérisation et apporter une fonction réactive telle qu'une fonction acide carboxylique. Le thiol fonctionnel préféré est l'acide thioglycolique.

La quantité d'agent de transfert à utiliser est fonction de la longueur de chaîne désirée pour les oligomères. Le degré de polymérisation moyen en nombre visé pour ce type d'application est, selon le procédé de l'invention, compris entre 5 et 30, ce qui conduit à un pourcentage de thiol compris entre 5 et 25% en poids, préférentiellement de 7 à 20% en poids.

L'amorceur est choisi parmi les amorceurs azoïques tels que le 2,2'-azobisisobutyronitrile, le 2,2'-azobis(2,4-diméthylvaléronitrile) ou parmi les amorceurs peroxydes tels que les peroxydes d'alkanoyle, les peresters, les hydroperoxydes.

D'une manière générale, les amorceurs azoïques tels que le 2,2'-azobisisobutyronitrile, le 2,2'-azobis(2,4-diméthylvaléronitrile) sont préférés bien que la nature de l'amorceur ne soit pas le paramètre prédominant de l'invention. La quantité d'amorceur à utiliser est comprise entre 0,5 et 3% molaire par rapport à la somme du nombre de moles de monomère et d'agent de transfert, préférentiellement 0,5 à 1,5% molaire.

Le solvant utilisé pour la préparation des télomères doit être inerte chimiquement avec la fonction du monomère réactif. Le point d'ébullition du solvant doit respecter une première contrainte concernant la température de la réaction et ne pas être trop élevé pour poser des problèmes lors du séchage de la composition polymère. Le solvant doit également posséder une constante de transfert nettement inférieure à celle du thiol utilisé.

Les solvants préférés sont les éthers cycliques tels que le THF, le dioxanne, préférentiellement le dioxanne; les nitriles aliphatiques préférentiellement l'acétonitrile, les composés aromatiques, préférentiellement le toluène, le xylène. Les solvants préférés sont l'acétonitrile, le toluène. La concentration en solvant pour la réaction de télomérisation est comprise entre 20 et 80%, préférentiellement 30 à 70% en poids. La température de la réaction pour un amorçage par le 2,2'-azobisisobutyronitrile ou le 2,2'-azobis(2,4-diméthylvaléronitrile) est préférentiellement comprise entre 60 et 80°C.

La durée de la réaction est déterminée par analyse par chromatographie en phase gazeuse. Ainsi, il a été montré qu'un temps de 3 h 30 mn à 75°C est suffisant pour épuiser les monomères résiduels.

Greffage des télomères réactifs :

Le télomère en solution dans un solvant tel que l'acétonitrile est utilisé sans purification dans la 2ème étape de greffage.

Le monomère utilisé dans cette seconde étape est fonction du monomère réactif utilisé dans la première étape. Les acides (méth)acryliques sont préférentiellement utilisés quand le méthacrylate de glycidyle est le monomère réactif du télomère. Le méthacrylate de glycidyle est préférentiellement utilisé quand l'acide (méth)acrylique est le monomère réactif du télomère. L'acide cinnamique peut également être utilisé de manière avantageuse pour greffer un oligomère portant des fonctions époxy, permettant ainsi d'obtenir une composition réticulable sous UV lointain.

Les monomères sont utilisés dans un rapport moléculaire monomère greffant/monomère réactif compris entre 0,5 et 2,0 et, préférentiellement, 0,9 à 1,1.

La réaction d'estérification des fonctions époxydes est effectuée en présence d'un catalyseur. Ce catalyseur est choisi parmi les amines tertiaires telles que la triéthylamine, la diméthyllaurylamine, les ammoniums quaternaires, et d'une manière générale les acides de Brönsted tels que l'acide para-toluènesulfonique, l'acide méthanesulfonique. Un composé organométallique du chrome : le chrome diisopropylsalicylate (CrDIPS) décrit dans Br. Polym. J., 1971, Vol. 3, pour activer la réaction entre une fonction acide carboxylique et une fonction époxy, constitue le catalyseur préféré pour cette réaction. La quantité de CrDIPS utilisée pour catalyser la réaction est comprise entre 0,1 et 10% molaire par rapport au nombre de fonction époxy ou acide de télomère et, préférentiellement, entre 1 et 8% molaire.

Dans le procédé selon l'invention, on peut ajouter le monomère ou télomère ou réaliser la procédure inverse. Il est cependant préférable d'ajouter le monomère ou le télomère portant les fonctions époxy au télomère ou monomère portant les fonctions acides carboxyliques.

Le solvant de la réaction de greffage est préférentiellement l'acétonitrile, mais les éthers cycliques et le toluène peuvent également être utilisés sans que cela nuise fortement à la réactivité du système. La concentration est comprise entre 20 et 80% et, préférentiellement entre 30 et 70%. Pour éviter toute polymérisation thermique lors du greffage, il est préférable d'ajouter une faible quantité d'un inhibiteur de radicaux tel que l'éther méthylique de l'hydroquinone (250-1000 ppm/monomère de greffage) et de réaliser un léger bullage d'air dans le mélange réactionnel. La réaction de greffage est réalisée entre 60 et 90°C et, préférentiellement, entre 65 et 80°C. Le suivi de la réaction peut être réalisé par dosage des fonctions acides et époxy résiduelles.

La durée de la réaction de greffage est comprise entre 10 et 24 heures en fonction du suivi des fonctions acides et époxy.

Durcissement des compositions polyacryliques insaturées :

Dans le procédé selon l'invention, on dilue l'oligomère greffé débarrassé du solvant de synthèse par un diluant réactif mono ou polyfonctionnel. Parmi les diluants réactifs monofonctionnels, on peut citer l'acrylate d'isobornyle, l'acrylamide de morpholine, l'acrylate de nonylphénol. Parmi les diluants polyfonctionnels, on peut citer le triacrylate de triméthylolpropane, le triméthacrylate de triméthylolpropane, le diacrylate de tripropylèneglycol, le diacrylate de butanediol, le diacrylate d'hexanediol... Le rôle du diluant réactif est d'abaisser la viscosité de l'oligomère. Les diluants préférés sont les diluants polyfonctionnels car ils permettent de limiter le taux de greffage nécessaire de l'oligomère (une partie des noeuds de réticulation est apportée dans ce cas par le diluant). La proportion de diluant ne doit cependant pas être trop élevée pour ne pas trop diminuer le taux de fluor final dans la composition. Ainsi, la quantité pondérale de l'oligomère dans la composition est comprise entre 90 et 50% et, préférentiellement, entre 80 et 60%, la quantité pondérale du diluant est comprise entre 10 et 50% et, préférentiellement, entre 20 et 30%.

Le durcissement des résines polyacryliques réalisées peut être obtenu par ajout d'un amorceur pouvant être un amorceur azoïque, un peroxyde associé ou non à un activateur du type amine aromatique tertiaire. Le système d'amorceur préféré est constitué d'un peroxyde organique, d'une amine aromatique et d'au moins un accélérateur.

Le peroxyde organique est choisi parmi l'hydroperoxyde de cumène, l'hydroperoxyde de tertio-butyle, l'hydroperoxyde de di-isopropyl benzène ou parmi les peroxydes de cétone aliphatiques ou cycloaliphatiques, en particulier peroxyde de méthyléthylcétone, peroxyde de cyclohexanone, peroxyde de méthylisobutylcétone ou encore, parmi les peresters, en particulier le peroxyde d'éthyl-2 hexanoate de t-butyle. Ces peroxydes sont utilisés à raison de 0,2 à 2% en poids par rapport au poids de la résine pure. Les amines aromatiques qui conviennent pour la mise en oeuvre du procédé sont choisies parmi la di-méthyl para-toluidine, la di-méthylaniline, la di-éthylaniline et de façon plus générale, parmi les amines aromatiques tertiaires : les quantités mises en oeuvre sont comprises entre 0,1 et 2,0% en poids par rapport au poids de la résine pure. Le procédé est réalisé en utilisant un système catalytique constitué d'au moins un accélérateur choisi parmi l'octoate de cobalt, le naphténate de cobalt, l'éthyl-hexanoate de cobalt, ou le produit de la réaction du pentoxyde de vanadium avec le monobutyl phosphite ou encore parmi l'acétyl-acétone. Lorsque l'accélérateur est choisi parmi un sel de cobalt, la quantité mise en oeuvre selon l'invention est comprise entre 100 et 1200 p.p.m. exprimée en quantité de cobalt métal par rapport au poids de la résine pure ; lorsque l'accélérateur est choisi parmi un sel de vanadium, la quantité mise en oeuvre est comprise entre 5 et 40 p.p.m. exprimée en quantité de vanadium métal par rapport au poids de la résine ; enfin lorsque l'accélérateur choisi est l'acétyl-acétone, la quantité utilisée est comprise entre 0,1 à 1% exprimée en poids par rapport au poids de la résine pure.

De façon avantageuse, le procédé est mis en oeuvre en utilisant les systèmes catalytiques associés de la manière suivante :

- un hydroperoxyde liquide avec la di-méthyl paratoluidine et le produit de la réaction du pentoxyde de vanadium avec le mono-butyl phosphite,
- un hydroperoxyde liquide ou un peroxyde de cétone liquide avec la di-méthyl para-toluidine et l'octoate de cobalt,
- un peroxyde d'éthyl 2-hexanoate de t-butyle liquide avec la di-méthyl para-toluidine et le couple d'accélérateurs constitué d'octoate de cobalt et d'acétyl-acétone.

Le durcissement des compositions polyacryliques selon l'invention peut aussi être obtenu par polymérisation sous rayonnement UV en présence d'un ou plusieurs photoamorceurs radicalaires.

Les photoamorceurs utilisés pour obtenir la photopolymérisation sont choisis dans la gamme des éthers de benzoïne, des dérivés de l'acétophénone, des oxydes d'acylphosphine, des diphénylcétones et des dérivés de la thioxantone. Les dérivés de l'acétophénone sont les photoamorceurs préférés selon l'invention ; parmi ces derniers, la 2,2'-éthoxyacétophénone et l'hydroxy-1-cyclohexylphénylcétone donnent les meilleurs résultats.

La quantité de photoamorceur à utiliser est comprise entre 1 et 10% poids et préférentiellement, 2 à 8% de la composition photopolymérisable. Les compositions sont photopolymérisées dans les conditions bien connues de l'homme de l'art par passage dans un tunnel UV.

Le durcissement thermique ou photochimique des compositions polyacryliques insaturées selon l'invention permet d'obtenir des revêtements présentant des performances hydrophobes améliorées pour une composition massique finale en méthacrylate de trifluoroéthyle de 15 à 80% poids et préférentiellement, de 20 à 50% poids.

La concentration en méthacrylate de trifluorométhyle dans la composition finale constitue le point clé de l'invention pour obtenir un revêtement présentant des performances hydrophobes.

Les exemples suivants illustrent l'invention.

Exemple N°1

Dans un tricol de 500 ml, chauffé par un bain d'huile, surmonté d'un réfrigérant ascendant, muni d'une agitation par barreau magnétique et d'une arrivée d'azote, on introduit : 51,5 g de méthacrylate de trifluoroéthyle (MATRIFE), 32,3 g de méthacrylate de glycidyle (MAGLY), 16,2 g de dodécanethiol (DDM), et 100 g d'acétonitrile.

Le réacteur est dégazé par un flux d'azote, puis son contenu est porté vers 75-76°C par chauffage du bain d'huile à 80°C. La température de consigne atteinte, on introduit 0,9% molaire de 2,2'-azobisisobutyronitrile (AIBN) par rapport à l'ensemble monomères + thiol.

La température et l'agitation sont maintenues pendant 3 h 30, temps nécessaire pour consommer les monomères résiduels et le thiol. Le contenu du réacteur est ensuite refroidi à température ambiante et dépoté.

Après élimination de l'acétonitrile sous pression réduite, on obtient un oligomère visqueux présentant un indice d'époxyde (IE) de 2,22 moles/kg pour un IE théorique de 2,27 moles/kg, une masse molaire moyenne en nombre (Mn) de 1340 et un degré de polymérisation moyen en nombre cumulé ($\overline{DP}_{n\,cum}$) de 7,7.

L'IE est le nombre de moles de groupements époxydes par kg d'échantillon sec. Il est déterminé par la méthode de R.Jay qui consiste à dissoudre l'échantillon à doser dans le chloroforme et à le titrer par une solution normalisée d'acide perchlorique dans l'acide acétique en présence d'un excès de bromure quaternaire. L'indicateur de virage est le cristal violet.

Exemples 2 à 9

La procédure de l'exemple 1 est répétée dans les exemples 2 à 9. Ces nouveaux essais diffèrent entre eux par la composition molaire et donc massique de départ, les autres paramètres sont maintenus constants.

La description de ces essais et les résultats obtenus sont reportés dans le tableau N°1.

Tableau N°1 -

| Télomères MATRIFE - ABU - MAGLY - DDM | | | | | | | |
|---|---|---|---|---|---|---|---|
| Exemple | MATRIFE g | MAGLY g | ABU g | DDM g | IE mole/kg | $\overline{M}_n$ osmométrie | $\overline{DP}_{n\,cum}$ |
| 2 | 54,1 | 9,0 | 28,6 | 8,2 | 0,60 | 1950 | 15,8 |
| 3 | 48,9 | 5,5 | 35,0 | 10,6 | 0,34 | 2740 | 12,1 |
| 4 | 48,4 | 5,8 | 34,8 | 11,0 | 0,40 | 2740 | 14,8 |
| 5 | 48,5 | 5,7 | 35,0 | 10,9 | 0,39 | 2776 | 15,0 |
| 6 | 48,5 | 5,7 | 34,9 | 10,9 | 0,40 | 2759 | 14,8 |
| 7 | 48,5 | 5,7 | 34,9 | 10,9 | 0,42 | 2750 | 14,9 |
| 8 | 48,1 | 9,1 | 26,1 | 16,7 | 0,60 | 2300 | 9,0 |
| 9 | 49,8 | 15,4 | 24,8 | 10,0 | 1,10 | 1950 | 12,8 |

- acétonitrile 100 g
- AIBN 0,9% molaire / monomères + thiol

Le calcul de $\overline{DP}_{n\,cum}$ est décrit dans Eur. Polym.J.vol.27 N° 2, pages 159 à 163, 1991 (B.Boutevin, J.P. Parisi, P. Vaneeckoutte)

$$\frac{1}{\overline{DP}_{ncum}} = \sum_{j=0}^{j=k-1} \frac{1}{(DP_{ni})_j}$$

avec

$$\frac{1}{DP_{ni}} = C_T \frac{[T]}{[M]}$$

[T] étant la concentration en télogène, [M] celle en monomère et $C_T$ la constante de transfert du monomère.

Exemple N°10

La procédure de l'exemple 1 est répétée pour la composition massique suivante : 43,7 g de méthacrylate de trifluoroéthyle, 21,9 g de méthacrylate de glycidyle, 22,3 g d'acrylate de 2-éthylhexyle et 12 g de dodécylmercaptan. On obtient après évaporation de l'acétonitrile, un oligomère visqueux et transparent possédant un indice d'époxy de 1,4 mole/kg, une $\overline{M}_n$ de 1500 et un $\overline{DP}_{n\,cum}$ de 9,2.

Exemple N°11

La procédure de l'exemple 1 est répétée pour la composition massique suivante : 42,1 g de méthacrylate de trifluoroéthyle, 5 g de méthacrylate de glycidyle, 30,2 g d'acrylate de butyle et 22,7 g de perfluorooctyle éthylènethiol. On obtient, après évaporation de l'acétonitrile, un oligomère visqueux et transparent présentant les caractéristiques suivantes

IE : 0,36 mole/kg
$\overline{DP}_{n\,cum}$ : 14,8
Tg : 11°C

Exemple N°12

La procédure de l'exemple 1 est répétée pour la composition massique suivante : 44,2 g de méthacrylate de trifluoroéthyle, 5,2 g de méthacrylate de glycidyle, 31,7 g d'acrylate de butyle et 18,8 g de perfluorohexyléthylènethiol.
Après évaporation de l'acétonitrile, on obtient un oligomère visqueux et transparent présentant les caractéristiques suivantes

IE : 0,37 mole/kg
$\overline{DP}_{n\,cum}$ : 14,8
Tg : 11°C

Exemple N°13

La procédure de l'exemple 1 est répétée pour la composition massique suivante : 49,8 g de méthacrylate de méthyle, 15,4 g de MAGLY, 24,8 g d'ABU et 10 g de dodécylmercaptan.
Après évaporation de l'acétonitrile, on obtient un oligomère visqueux présentant les caractéristiques suivantes :

IE : 1,1 mole/kg
$\overline{M}_n$ : 2100
$\overline{DP}_{n\,cum}$ : 13,0

Exemple N°14

Dans un tricol de 500 ml, chauffé par un bain d'huile, surmonté d'un réfrigérant ascendant, muni d'une agitation par barreau aimanté et d'une arrivée d'azote, on introduit : 55,2 g de méthacrylate de trifluoroéthyle, 8 g d'acide acrylique, 30,6 g d'acrylate de butyle, 6,1 g d'acide thioglycolique et 100 g d'acétonitrile.
Le réacteur est dégazé par un flux d'azote, puis son contenu est chauffé à 80°C. La température de consigne atteinte, on introduit 0,9% molaire de 2,2'-azobis-isobutyronitrile par rapport à l'ensemble monomères + thiol.
La température et l'agitation sont maintenues pendant 4 h. Le contenu du réacteur est ensuite refroidi à température ambiante et dépoté.
Après élimination de l'acétonitrile sous pression réduite, on obtient un oligomère visqueux et transparent présentant les caractéristiques suivantes

Indice d'acide : 1,91 mole/kg
Tg : 22,3°C (mesurée par calorimétrie comme décrit dans la troisième édition de Polymer Handbook).

Exemple N°15

Dans un tricol de 250 ml, chauffé par un bain d'huile, surmonté d'un réfrigérant ascendant, muni d'une ampoule à brome, d'une agitation par barreau magnétique et d'un tube plongeur permettant un bullage d'air sec, on introduit :

75 g d'acétonitrile, 2,5 g d'acide acrylique (rapport molaire acide/époxy = 1,71), 0,7g de CrDIPS (rapport molaire Cr-DIPS/époxy 7,8%) et 500 ppm d'éther méthylique de l'hydroquinone (EMHQ) par rapport à l'acide acrylique.

Le contenu du réacteur est porté à 70°C et on introduit en 1 heure un mélange de 25 g d'acétonitrile et de 48 g d'oligomère issu de l'exemple N°7 contenant 1,16 mole d'époxy/mole, tout en maintenant un très léger bullage d'air sec.

Les conversions en acide acrylique et des fonctions époxy sont suivies par dosage de l'acidité et des époxydes. La réaction est arrêtée lorsque les concentrations en fonctions acides et époxy n'évoluent plus (13 heures).

Le contenu du réacteur est alors refroidi à température ambiante, puis dépoté, et l'on obtient, après élimination de l'acétonitrile, un oligomère visqueux présentant les caractéristiques suivantes :

indice d'époxy final = 0,042 mole/kg correspondant à un taux de transformation des fonctions époxy de 90%,

indice d'acide final = 0,32 mole/kg correspondant à un taux de transformation de l'acide acrylique de 56%.

Exemples N°16 à 24

La procédure de l'exemple 15 est reproduite en modifiant la nature du catalyseur et le rapport molaire catalyseur/époxy.

Acétonitrile : 100 g
Oligomère : 48 g
Au tableau 2 NEt3 signifie triéthylamine et AA signifie acide acrylique

Tableau N°2

| Exemple | Oligomère | Acide acrylique g | Acide époxy | Catalyseur | Cata époxy % | Temps réaction | $I^E$ final mole/kg | Conv époxy % | $I^A$ final mole/kg | Conv AA % |
|---|---|---|---|---|---|---|---|---|---|---|
| 16 | 1 | 8,8 | 1,12 | NEt$_3$ | 7,8 | 20h20 | 0,415 | 66 | 0,98 | 67,9 |
| 17 | 4 | 2,4 | 1,71 | CrDIPS | 7,8 | 24h | 0,05 | 87,2 | 0,31 | 54,7 |
| 18 | 6 | 2,3 | 1,66 | NEt$_3$ | 7,8 | 20h | 0,21 | 47,5 | 0,44 | 33,7 |
| 19 | 8 | 2,3 | 1,11 | NEt$_3$ | 7,8 | 24h | 0,44 | 31,7 | 0,39 | 41,4 |
| 20 | 9 | 4,2 | 1,11 | CrDIPS | 4,5 | 16h30 | 0,10 | 90,8 | 0 | 100 |
| 21 | 10 | 5,4 | 1,11 | CrDIPS | 4,5 | 14h20 | 0,15 | 92,0 | 0 | 100 |
| 22 | 11 | 1,5 | 1,2 | CrDIPS | 7,8 | 13h | 0,09 | 75,0 | 0 | 100 |
| 23 | 12 | 1,5 | 1,2 | CrDIPS | 7,8 | 24h | 0,06 | 85 | 0 | 100 |
| 24 | 13 | 4,6 | 1,2 | CrDIPS | 4,5 | 20h | 0,088 | 92 | 0,07 | 95 |

Exemple N°25

La procédure de l'exemple 15 est reproduite en utilisant la composition suivante : 75 g d'acétonitrile, 50 g d'oligomère issu de l'exemple N°14 et contenant 1,91 mole d'acide carboxylique/kg, 0,63 g de CrDIPS (rapport molaire CrDIPS/acide : 1,5%).

Le contenu du réacteur est porté à 70°C et on introduit en 1/2 heure une solution de 14,9 g de méthacrylate de glycidyle surstabilisée avec 500 ppm d'EMHQ dans 25 g d'acétonitrile, tout en maintenant un très léger bullage d'air. La réaction est arrêtée quand les concentrations en fonctions acide et époxy n'évoluent plus (24 heures).

Le contenu du réacteur est alors refroidi à température ambiante, puis dépoté. On obtient après élimination de l'acétonitrile, un oligomère visqueux transparent présentant les caractéristiques suivantes.

- indice d'acide : 0,35 mole/kg correspondant à un taux de greffage de 82%,
- indice d'époxy : 0,16 mole/kg correspondant à une conversion de 90%.

Exemple N°26

La procédure de l'exemple 25 est reproduite à l'exception que l'acétonitrile solvant de la réaction est remplacé par le dioxanne et que la température est portée de 70 à 90°C.

On obtient dans ce cas un temps de réaction de 8 heures et, après évaporation du dioxanne, un oligomère visqueux présentant les caractéristiques suivantes :

indice d'acide final : 0,26 mole/kg correspondant à un taux de greffage de 87%,
indice d'époxy final : 0,10 mole/kg correspondant à une conversion de méthacrylate de glycidyle de 94%.

Exemple N°27

Photopolymérisation des différents télomères greffés

Le durcissement des télomères est effectué de la manière suivante : étalement à température ambiante de la composition photopolymérisable et photoréticulable contenant l'oligomère greffé, un solvant réactif polyfonctionnel et un photoamorceur, sur une plaque d'aluminium ou de fer (préalablement dégraissée avec du trichloroéthylène), au moyen d'une tige filetée de 30 mm. Les plaques recouvertes sont ensuite irradiées sous le tunnel UV à une vitesse de 0,8 cm/s. Après irradiation, les plaques sont séchées dans un four à 80°C.

Pour caractériser les propriétés hydrophobes des films, les plaques revêtues sont conditionnées 2 jours à 21°C sous 50% d'humidité, puis on effectue une mesure d'angle de contact avec de l'eau bidistillée.

Pour caractériser la résistance au solvant des revêtements, on fait subir au film des aller et retour avec un coton imbibé de méthyléthylcétone jusqu'à abrasion de celui-ci.

Le tableau N°13 rassemble les différentes compositions réalisées et les performances obtenues par les revêtements.

Ce tableau montre une nette amélioration des performances hydrophobes des revêtements quand la composition est réalisée à partir d'un télomère greffé contenant du méthacrylate de trifluoroéthyle par rapport aux diluants réactifs seuls et au cas où le méthacrylate de trifluoroéthyle est remplacé par du méthacrylate de méthyle.

Tableau N°3 : Durcissement sous rayonnement

| Essai | Télomère greffé | % télomère | Diluant réactif | % diluant | Photoamorceur (2) % | MATRIFE (1) % | Angle contact ° | Résistance à la MEC |
|---|---|---|---|---|---|---|---|---|
| 28 | – | 0 | TMPTA | 100 | Irgacure 184 4% | 0 | 60±2 | >200 |
| 29 | 15 | 80 | TMPTA | 20 | Irgacure 184 4% | 35,4 | 94,7±2,7 | 15 |
| 30 | 18 | 80 | TMPTA | 20 | Irgacure 184 4% | 25,6 | 99 | 3 |
| 31 | 18 | 70 | TMPTA | 30 | Irgacure 184 4% | 31,2 | 95 | 40 |
| 32 | 16 | 80 | TMPTA | 20 | Irgacure 184 4% | 33,5 | 79±1,5 | >200 |
| 33 | 15 | 70 | TPGDA | 30 | Irgacure 184 4% | 31,0 | 100±2,3 | 4 |
| 34 | 16 | 50 | TPGDA | 50 | Irgacure 184 4% | 20,9 | 88±1,5 | 100 |

MEC est la méthyléthylcétone

Irgacure 184 est l'hydroxy-1 cyclohexylphénylcétone

TMPTA est le triacrylate de triméthylolpropane

TPGDA est le diacrylate de tripropylèneglycol.

EP 0 714 916 A1

Les angles de contact sont mesurés à l'aide d'un goniomètre, avec de l'eau bidistillée, à une température de 21°C.

Tableau N°3 : Durcissement sous rayonnement (suite)

| Essai | Télomère greffé | % télomère | Diluant réactif | % diluant | Photoamorceur (2) % | MATRIFE (1) % | Angle contact ° | Résistance à la MEC |
|-------|-----------------|------------|-----------------|-----------|---------------------|---------------|-----------------|---------------------|
| 35 | 15 | 70 | HDDA | 30 | Irgacure 184 4% | 31,0 | 100 | 5 |
| 36 | - | 0 | HDDA | 100 | Irgacure 184 4% | 0 | 48±1 | >200 |
| 37 | 24 | 80 | TMPTA | 20 | Irgacure 184 4% | 0 | 72±2 | 20 |
| 38 | 20 | 70 | TPGDA | 30 | Irgacure 184 4% | 30,8 | 84 | 10 |
| 39 | 22 | 70 | TMPTA | 30 | Irgacure 184 4% | 27,5 | 106±2 | 25 |
| 40 | 25 | 70 | TMPTA | 30 | Irgacure 184 4% | 28,6 | 95±1,6 | >200 |

(1)    % MATRIFE global en tenant compte de l'ajout du monomère greffant, du diluant réactif et du photoamorceur.

(2)    % photoamorceur / (télomère + diluant réactif).

sur les plaques traitées, conditionnées pendant 2 jours dans une salle à 50% d'humidité. Cette dernière précaution permet aux groupements polaires éventuels du film de s'orienter vers la surface. On se place ainsi dans des conditions adéquates pour mesurer les angles de contact.

L'angle de contact mesuré avec l'eau permet de déterminer la composante polaire de la tension superficielle du revêtement. Plus l'angle de contact est élevé, plus le revêtement est hydrophobe.

La résistance à la MEC consiste à mesurer le nombre d'aller - retours effectués en passant un papier imbibé de MEC sur le film, jusqu'à dégradation de celui-ci.

## Revendications

1. Composition, caractérisée en ce qu'elle est constituée

   (a) de 30 à 90 parties en poids d'un oligomère ayant un degré de polymérisation compris entre 5 et 16 et ayant de 75 à 95% en poids de motifs de méthacrylate de trifluoroéthyle et de 5 à 25% en poids de motifs d'un thiol de formule R-SH dans laquelle R est alcoyle linéaire ayant de 8 à 20 atomes de carbone ou alkylèneperfluoroalcoyle ayant de 1 à 4 atomes de carbone dans la portion alkylène et de 8 à 20 atomes de carbone en tout, ou d'un thiol fonctionnel,

   (b) de 10 à 70 parties en poids d'un diluant.

2. Composition suivant la revendication 1, caractérisée en ce qu'elle est constituée

   (a) de 50 à 90 parties en poids d'un oligomère ayant un degré de polymérisation compris entre 5 et 16 et ayant de 15 à 80% en poids de motifs de méthacrylate de trifluoroéthyle, de 5 à 25% en poids de motifs d'un thiol tel que défini ci-dessus, de 5 à 40% en poids de motifs d'un monomère réactif choisi parmi

      (i) l'acide acrylique ou l'acide méthacrylique, et
      (ii) les monomères acryliques époxydés, les monomères acryliques hydroxylés et les monomères acryliques à fonction très réactive,

   et de 1 à 25% en poids de motifs d'un monomère selon

      (i) quand l'oligomère contient déjà des motifs de monomère réactif selon (ii) ou de motifs d'un monomère
      (ii) quand l'oligomère contient déjà, comme motifs de monomère réactif, un motif selon (i),

   (b) de 10 à 50 parties en poids d'un diluant,
   (c) d'une quantité d'amorceur de photopolymérisation suffisante pour provoquer la réticulation de la composition quand elle est exposée à un rayonnement actinique.

3. Composition suivant la revendication 1, caractérisée en ce qu'elle est constituée

   (a) de 90 à 50 parties en poids d'un oligomère ayant un degré de polymérisation compris entre 5 et 16 et ayant de 15 à 80% en poids de motifs de méthacrylate de trifluoroéthyle, de 5 à 40% en poids de motifs d'un monomère réactif tel que défini sous (i) ou sous (ii) ci-dessus, de 5 à 25% en poids de motifs d'un thiol tel que défini ci-dessus, de 5 à 60% en poids de motifs de monomères acryliques dépourvus de fonctions réactives et de 1 à 25% en poids de motifs de monomères réactifs tels que définis sous (i) lorsque l'oligomère contient déjà des motifs de monomères acryliques réactifs définis sous (ii) ou de motifs de monomères réactifs définis sous (ii), quand l'oligomère contient déjà des motifs de monomères acryliques réactifs définis sous (i),
   (b) de 10 à 50 parties en poids d'un diluant,
   (c) d'une quantité d'amorceur de photopolymérisation suffisante pour provoquer la réticulation de la composition quand elle est exposée à un rayonnement actinique.

4. Procédé de préparation d'une composition suivant la revendication 1, caractérisé en ce qu'il consiste à mélanger

   (a) de 90 à 30 parties en poids d'un oligomère ayant un degré de polymérisation compris entre 5 et 16 et ayant de 75 à 95% en poids de motifs de méthacrylate de trifluoroéthyle et de 5 à 25% en poids de motifs d'un thiol tel que défini à la revendication 1,

**EP 0 714 916 A1**

(b) de 10 à 70 parties en poids d'un diluant.

5. Procédé de préparation d'une composition suivant la revendication 2, caractérisé en ce qu'il consiste à mélanger

(a) de 50 à 90 parties en poids d'un oligomère ayant un degré de polymérisation compris entre 9 et 16 et ayant de 15 à 80% en poids de motifs de méthacrylate de trifluoroéthyle, de 5 à 25% en poids d'un thiol tel que défini à la revendication 1, de 5 à 40% en poids de motifs d'un monomère réactif choisi parmi :

(i) l'acide acrylique ou l'acide méthacrylique, et
(ii) les monomères acryliques époxydés, les monomères acryliques hydroxyles et les monomères acryliques à fonction très réactive,

et de 1 à 25% en poids de motifs d'un monomère selon (i) quand l'oligomère contient déjà des motifs de monomères réactifs suivant (ii) ou d'un motif de monomères (ii) quand l'oligomère contient déjà comme motifs de monomères réactifs, des motifs selon (i),
(b) de 10 à 50 parties en poids d'un diluant,
(c) une quantité d'amorceur de photopolymérisation suffisante pour provoquer la réticulation de la composition quand elle est exposée à un rayonnement actinique.

6. Procédé de préparation d'une composition suivant la revendication 3, caractérisé en ce qu'il consiste à mélanger

(a) de 90 à 50 parties en poids d'un oligomère ayant un degré de polymérisation compris entre 5 et 16 et ayant de 15 à 80% en poids de motifs de méthacrylate de trifluoroéthyle, de 5 à 40% en poids de motifs d'un monomère réactif tel que défini sous (i) ou sous (ii) à la revendication 3, de 5 à 25% en poids de motifs d'un thiol tel que défini à la revendication 1, de 5 à 60% en poids de motifs de monomères acryliques dépourvus de fonctions réactives et de 1 à 25% en poids de motifs de monomères réactifs tels que définis sous (i) à la revendication 3 lorsque l'oligomère contient déjà des motifs de monomères acryliques réactifs définis sous (ii) ou de motifs de monomères réactifs définis sous (ii), quand l'oligomère contient déjà des motifs de monomères acryliques réactifs définis sous (i),
(b) de 10 à 50 parties en poids d'un diluant,
(c) une quantité d'amorceur de photopolymérisation suffisante pour provoquer la réticulation de la composition quand elle est exposée à un rayonnement actinique.

7. Utilisation d'une composition suivant l'une des revendications 1 à 3 pour obtenir un revêtement transparent hydrophobe.

14

**Office européen des brevets**

# RAPPORT DE RECHERCHE EUROPEENNE

Numero de la demande

EP 95 40 2665

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DATABASE WPI Section Ch, Week 8717 Derwent Publications Ltd., London, GB; Class A41, AN 87-119489 'NEW (METH)ACRYLIC ACID FLUOROALKYL OLIGOMERS...' & JP-A-62 063 560 (DAIKIN KOGYO K.K.) , 20 Mars 1987 * abrégé * | 1 | C08F2/38 C09D4/00 C09D4/06 |
| D,Y | EP-A-0 426 530 (ATOCHEM) * exemple 1 * | 1,2 | |
| Y | EP-A-0 243 605 (DAINIPPON INK AND CHEMICALS INC.) * revendications; exemples * | 1,2 | |
| A | DATABASE WPI Section Ch, Week 9135 Derwent Publications Ltd., London, GB; Class A89, AN 91-257388 'Photopolymerisable compsn.' & JP-A-03 168 749 (HITACHI CHEMICAL K.K.) , 22 Juillet 1991 * abrégé * | 1,2 | **DOMAINES TECHNIQUES RECHERCHES (Int.Cl.6)** C08F C09D |

Le présent rapport a été établi pour toutes les revendications

| Lieu de la recherche | Date d'achèvement de la recherche | Examinateur |
|---|---|---|
| LA HAYE | 18 Mars 1996 | Loiselet-Taisne, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant